**Europäisches Patentamt**

(19) **European Patent Office**

**Office européen des brevets**

(11) Publication number : **0 216 562 B1**

## (12) EUROPEAN PATENT SPECIFICATION

(45) Date of publication of patent specification : **25.10.95 Bulletin 95/43**

(51) Int. Cl.⁶ : **F24J 2/06, G02B 3/08**

(21) Application number : **86306943.1**

(22) Date of filing : **09.09.86**

(54) **Refracting solar energy concentrator and thin flexible fresnel lens.**

(30) Priority : **09.09.85 US 774048**

(43) Date of publication of application : **01.04.87 Bulletin 87/14**

(45) Publication of the grant of the patent : **25.10.95 Bulletin 95/43**

(84) Designated Contracting States :
**CH DE FR GB IT LI NL SE**

(56) References cited :
**EP-A- 0 051 932**
**DE-A- 2 917 743**
**NL-A- 7 906 145**
**US-A- 3 203 306**
**US-A- 4 249 516**
**OPTICS COMMUNICATIONS, vol. 34, no. 2, August 1980, pages 143-146, Amsterdam, NL; E.M. KRITCHMAN: "Linear fresnel lens with grooves of finite size"**

(73) Proprietor : **MINNESOTA MINING AND MANUFACTURING COMPANY**
**3M Center,**
**P.O. Box 33427**
**St. Paul, Minnesota 55133-3427 (US)**

(72) Inventor : **Appeldorn, Roger H. c/o Minnesota Mining and**
**Manufacturing Co.**
**2501 Hudson Road**
**P.O. Box 33427**
**St. Paul Minnesota 55133-3427 (US)**

(74) Representative : **Baillie, Iain Cameron et al**
**c/o Ladas & Parry**
**Altheimer Eck 2**
**D-80331 München (DE)**

## Description

Technical Field and Background of the Invention

The present invention relates to an improved light weight solar energy concentrator and in one aspect to an improved thin flexible Fresnel-type lens for focusing solar radiation incident on the lens' outer surface onto a target area by refraction.

The concept of utilizing solar energy is not new. One of the earliest references in literature to the use of solar energy is made in Aristophanes' "The Comedy of the Clouds", which was performed in 434 B.C. In this play, one of the characters, Strepsiades, declares that he will destroy a wax tablet record of a debt by using the sun and a glass lens to melt away the writing. In order for this remark to be appreciated by the theater-going public, it must have been common knowledge that the rays of the sun could be focused to generate heat. In addition, Lactantius, in 303 A.D. stated that a glass globe filled with water and held in the sun would start a fire on even the coldest day. Further, an entry in the inventory of the vestry of West Minster Abbey dated 1388 records the kindling of the "new fire" on Easter Eve with a "burning glass", and in 1745, the French scientist, Buffon, conducted experiments in generating high temperatures by concentrating the sun's rays.

Solar energy is especially attractive today, in this age of diminishing fossil fuels in which the public's awareness of atmospheric pollution and apprehension of nuclear energy has encouraged the development of alternative energy sources. Solar energy, as such an alternative, is inexhaustable and pollution free. A few of the present applications of solar energy that have evolved are the generation of electricity with photovoltaic cells, as illustrated in U.S. Patent No. 4,204,881, distillation of water, as illustrated in U.S. Patent No. 4,270,981, "cool" lighting for buildings, as illustrated in U.S. Patent No. 4,297,000, and the accumulation and storage of heat, as illustrated in the below referenced patents. However, several problems have been encountered in attempting to devise an efficient, economical and practical means of concentrating this abundant enery source.

Several systems have been devised or proposed over the years in an attempt to concentrate or collect solar energy as a practical alternative to other forms of energy. Generally, there have been three types of solar concentrators or collectors proposed, namely, those employing mirrors, lenses, or a combination of both.

For example, one such system has utilized concave, parabolic mirrors in the form of a large dish, as illustrated in U.S. Patent No. 4,111,184. In addition, other systems have utilized reflective troughs, as illustrated in U.S. Patent Nos. 4,385,430 and 4,211,211, or an array of concentric annular conic frusta, as illustrated in U.S. Patent No. 4,347,834. Further, a system has used flat mirrored surfaces as illustrated in U.S. Patent No. 4,344,417 as well as flat fresnel mirrors, as illustrated in U.S. Patent No. 3,058,394.

The reflective trough appeared to offer the best potential for high concentration of solar energy. However, this goal was seldom, if ever, achieved because of the precision required in the curvature of the reflective surface where any angular change at any point from the prescribed surface resulted in a two fold deviation of the reflected solar radiation. In addition, vibration of the reflecting surface could not be tolerated. The need to maintain the accuracy and steadiness of the reflecting surface over long periods of time required that the reflector be constructed of very rigid materials and be carefully aligned. Thus, a heavy and massive supporting structure was required. In addition, this massive structure had to be mounted so that it would remain vibration-free while tracking the sun in diurnal motion. Further, such structures have not been proved adaptable or feasible for use in space where weight reduction is of monumental importance.

In an attempt to overcome some of the limitations of the above reflective structures, refractive lenses have been utilized. Examples of Fresnel-type lenses used to concentrate solar energy are illustrated in U.S. Patent Nos. 4,289,118; 4,194,949; and 4,011,857. In addition to the above, such lenses have also been utilized in the form of flat fresnel lenses, as illustrated in U.S. Patent Nos. 3,985,118 and 3,203,306, convex fresnel lenses, as illustrated in U.S. Patent No. 4,116,223, semi-cylindrical or tubular, as illustrated in U.S. Patent Nos. 4,299,201 and 3,125,091, or a linear array of refracting fresnel elements, as illustrated in U.S. Patent No. 4,069,812.

Several limitations have been associated with the utilization of such lenses. In situations where flat fresnel lenses have been used, they have resulted in limited apertures because of excessive chromatic aberration near the edges of the lenses. Arcuate shaped lenses have attempted to overcome this limitation but because of the need to maintain the desired configuration they have had to be constructed of a rigid material or required a complex support system. In any event, the above lens structure, like the mirror structures, have not proved adaptable or feasible for use in space where light weight construction and ease of deployment without precision alignment are of monumental importance.

Lastly, a combination of refracting lenses and reflecting mirrors have been utilized to concentrate solar energy in an attempt to overcome the above limitations, an example of which are illustrated in U.S. Patent Nos. 4,337,759; 4,238,246; and 4,022,186. Additionally, a refracting lens and reflecting trough combination have been utilized, as illustrated in U.S. Patent Nos. 4,323,052 and 4 230 094. However, these structures are rigid in an attempt to maintain their configuration or shape.

An example of such a rigid structures is also that in NL-A-7 906 145 disclosing an optical panel functioning as a lens system and consisting of a transparent panel, of which one side is smooth and the other side is provided with an number of parallel rectilinear, appropriately profiled, ribs with a triangular cross-section, and which is bowed perpendicular to the direction of the ribs during manufacture or when the optical panel is used, and whereby the angles and the dimensions of the triangular cross-section referred to are calculated in such a way that the bowed panel has a linear focus. This prior panel is sufficiently stiff for it to be self-supporting when bowed into an arc with its two lower ends anchored in position.

A prior art document that is also of interest is DE-A-2 917 743 that discloses a flexible sheet of transparent material for concentrating rays of sunlight, said sheet having on one face a linear array of discrete optically active prismatic light ridges and grooves, the sheet being sufficiently flexible for it to be rolled up when not required. This prior art also discloses how, in use, a rectangular frame is necessary for this flexible sheet and how the sheet must be tied within this frame in a manner maintaining the sheet under tension.

## Summary of the Invention

The invention is as defined in the accompanying claims, Claim 1 of which has been divided into a two part form based on the assumption that the flexible sheet of DE-A-2 917 743 is the nearest state of the art and based also on what may possibly be the conditions obtainable from this prior art flexible sheet if it were to be supported on a frame such that it is folded along at least one line parallel to said linear arrays of discrete optically active prismatic light ridges and grooves; and such that instant sunlight is not normal to the film sheet; with the shape of said prismatic light ridges and grooves changing in the manner of a Fresnel lens such that incident solar radiation is focused onto a target area. With this in mind the present invention is characterized over such an assumption in that the present film sheet is so designed that for the light striking the film sheet at its outer edge with respect of the axis of said ridges and grooves the angel of incidence on said film sheet as measured to a normal to the surface through which light enters and the exit angle as measured to a normal to the surface through which the light exits are substantially equal, such that the focus of the incident solar radiation by the lens is less sensitive to bowing of the film sheet.

The present invention affords an improved light weight refracting solar energy concentrator and thin flexible Fresnel-type lens which achieves and maintains high operational efficiencies with minimal weight and substantially reduced manufacturing cost. In addition, because of the structures simplicity of construction, it can easily be deployed in space. Further, notwithstanding such simplicity of construction and its compactness, distortion of the refracting surface will not materially affect the efficiency of the concentrator, rendering the concentrator particularly advantageous for use in space.

## Disclosure of Invention

The invention described herein contemplates an improved solar energy concentrator, specifically, one in which a thin flexible Fresnel-type lens focuses incident solar radiation onto a target area by refraction. In addition, the fresnel lens is supported or suspended above the target area and folded along at least one line or region parallel to the refractive prisms of the lens which are generally parallel to the axis of the target area whereby the fresnel lens opens toward the target area. Further, the efficiency of the concentrator is not materially affected by distortion of the fresnel lens when refraction by the thin film is substantially at minimum deviation. Thus, the fresnel lens is positioned above the target area so as to allow that portion or section of the lens between the folds to bow and flex under wind loads, gravity and other environmental factors without causing a significant deterioration in the efficiency of the system even though the surface of the fresnel lens may bow in and out from a planar position as much as 5° or more. The degree of bowing is conveniently measured as the angle between the plane in which the thin fresnel lens should lie and the tangent to the curve of the bow at the point of support.

The material of which the fresnel lens consists is essentially a smooth flexible transparent polymeric material having a smooth surface and an opposite surface consisting of a plurality of miniature linear fresnel prisms or lenticular elements arranged side by side wherein the smooth surface effectively forms one of the optical faces of each prism. In addition, each prism includes an optical face which is intended to redirect the light. Each prism also has a nonactive optical face or step which does not block or interfere with the directed solar radiation. Thus, the prisms in the film are arranged such that the steps defined by the prisms do not interfere with the refraction of the incident solar radiation. Further, in the preferred embodiment, the fresnel lens is oriented so that the more fragile fresnel prisms will not be directly exposed to hail, rain or other destructive environmental elements.

The support structure which suspends the fresnel lens above the target area consists of struts or wires defining the aperture of the solar concentrator, and the fresnel lens is suspended on the struts or wires under slight tension. A center support extends along the center of the fresnel lens and is preferably removably supported by a spring biased shock absorber to apply a small force to the thin film to place it under a small but constant tension and to dampen severe repeated undulations. In this configuration, the fresnel lens can deflect under air pressure to maintain an acceptable performance.

The target area upon which the solar radiation is focused can be black, opaque, translucent, or transparent and either pipes for transferring an absorptive media, or photovoltaic cells, etc. from which energy can be taken.

Brief Description of Drawings

The various features, objects, benefits and advantages of the present invention will become more apparent by reading the following detailed description in conjunction with the drawings where like reference numerals identify corresponding components:

Figure 1 is a perspective view of a solar energy concentrator constructed in accordance with the present invention;

Figure 2 is a side elevational view of the solar energy concentrator of Figure 1;

Figure 3 is a vertical cross-sectional view of the solar energy concentrator taken in the direction of arrows 3-3 of Figure 1;

Figure 4 is a fragmentary vertical cross-sectional view of the target or absorber of the solar energy concentrator;

Figure 5 is a schematic diagram of the thin flexible fresnel lens of the solar energy concentrator;

Figure 5A and 5B are enlarged diagrammatic sectional views of the lens of Figure 5 taken at spaced points of the lens of Figure 5;

Figure 6 is a diagrammatic view showing the relationship of the rays through the solar energy concentrator illustrating refraction by an element of the concentrator of the present invention;

Figure 7A is a chart showing the width of the image of the sun as a function of prism position (including chromatic aberration from 400 nm to 1000 nm) at +2° bow (solid line) and +1° bow (broken line);

Figure 7B is a chart showing the width of the image of the sun as a function of prism position (including chromatic aberration from 400 nm to 1000 nm) at -2° bow (solid line) and 0° bow (broken line); and

Figure 8 is a perspective representation of a crossed, linear echelon refractor lens of the present invention for point focusing incident solar radiation.

Detailed Description

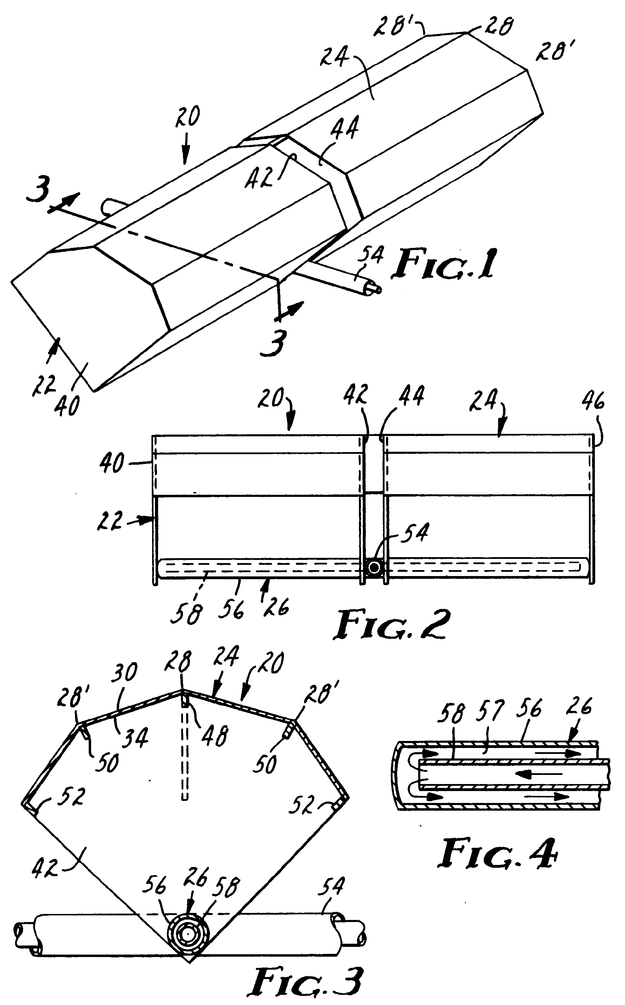

Referring to Figures 1, 2 and 3 of the drawings, the solar energy concentrator of the present invention, generally designated 20, includes a lightweight support structure or frame 22 and a linear echelon Fresnel-type lens 24 for focusing incident solar radiation onto a target area or absorber 26. It is contemplated that the lens 24, which in this invention is a thin, limply flexible, transparent film, be folded at an acute angle to incident solar radiation (not normal) along at least one line or region 28 parallel to the refractive prisms of the lens which are generally parallel to the axis of the target area 26, and the film is suspended, drapped or mounted upon the support structure 22 to open toward the target area 26. The efficiency of the concentrator 20 is not materially affected by distortion of the lens 24. For illustration purposes only, a solar energy concentrator 20 is depicted wherein the lens 24 is folded along three lines 28. It must be appreciated that the width and height (and corresponding focal length) of any given concentrator is a matter of choice dependant upon the given circumstances and the number of folds may therefor vary.

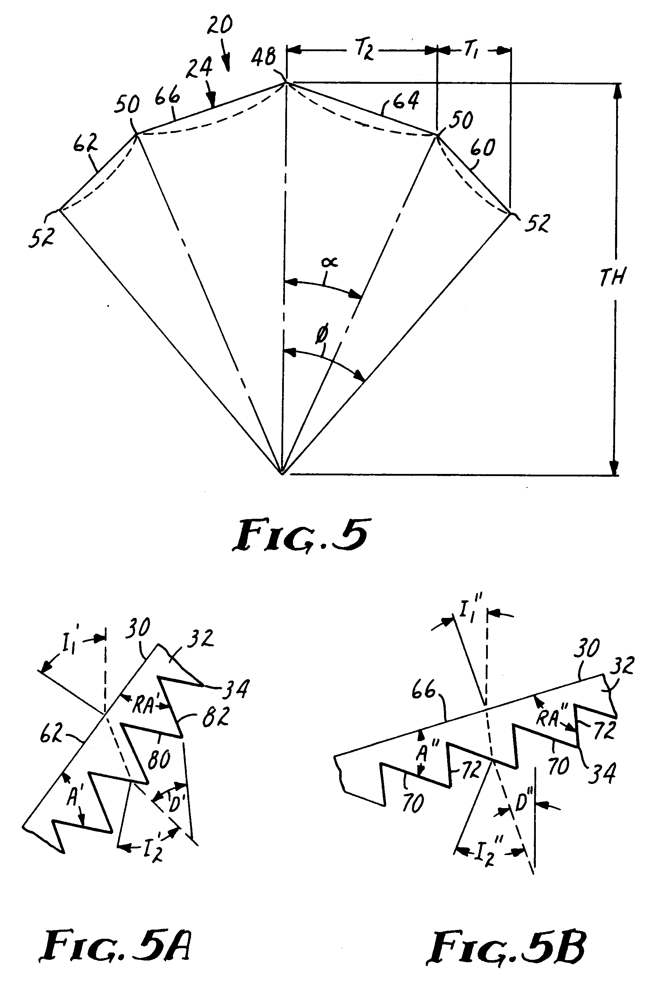

The lens 24 consists of a thin, limply flexible, transparent sheet of polymeric material, for example, polymethylmethacrylate, having a smooth surface 30 on one side and a plurality of miniature linear fresnel prisms 32 extending lengthwise and arranged side by side to form the opposite or second surface 34, as illustrated in Figures 5A and 5B. The thin lens film 24 is very flexible and about 0.015 inch thick. The thin flexible fresnel lens 24, in a preferred embodiment, is positioned so that the smooth surface 30 is toward the sun, and the opposite surface 34 is toward the target area 26 to prevent the prisms 32 from being directly exposed to hail, rain and other destructive environmental elements. In addition, because the film is easy to install, it can be conveniently replaced when soiled and/or damaged by the deleterious effects of the atmosphere and the elements. The prisms 32 on the film are arranged in such a manner that loss due to step interference caused by the nonactive face of the prisms is not in the way of light rays refracted by the optically active face of the prisms which is intended to bend the light toward the focus.

The lens 24 is supported such that it is allowed to bow or flex transversely, axially or lengthwise to move toward and away from the target area 26. The degree of bowing is conveniently measured as the angle between the plane in which the thin fresnel lens should lie and the tangent to the curve of the bow at the point of support, and the surface may bow in and out as much as 1°, 2°, 5° or more, without materially affecting the image quality of the lens. As used herein, a negative bow of -1° or -2° would mean the lens would bow away from the target area, and a positive bow of +1° or +2° is toward the target area. It is also contemplated that one section or multiple sections located between the transversely placed supports may be used individually or in combination as a solar energy concentrator.

The design of the illustrated embodiment of Figure 3 utilizes a thin flexible fresnel lens film sheet 24 with the lens folded about the center 28 of the solar concentrator aperture and by another fold 28' on each side of the lens inward from the edge of the lens. These folds, one at the center 28, together with the two additional folds at 28', serve to minimize the deleterious effect of bowing as well as undulations in the thin, flexible fresnel lens film. In addition, step losses due to some of the refracted light being blocked by adjacent prisms is minimized, and further, the spread of the focused image due to chromatic aberration is also minimized. All of which would make a flat fresnel lens of the same aperture unacceptable. Folding the lens on each side of the center will also make a more compact lens design. In focusing the incident solar radiation onto the target area or absorber 26 the rays at the outer periphery of the concentrator of solar energy are bent the most. These rays, therefore, are affected the most by aberrations. Therefore, the design parameters of the discrete array of linear fresnel prisms is based on a fresnel prism, at or substantially close to the periphery of the concentrator designed so that the angle of incidence of the solar radiation is equal to the angle of emergence of the same ray after refraction. This results in minimum deviation of that ray for that particular fresnel prism making the lens 24 performance insensitive to bowing, rotation or distortion. Therefore, the fold is positioned at the point where the exit ray from the lens becomes substantially perpendicular to the fresnel prism's optical face on the surface panel. The portion of the lens extending from the fold to the center is preferably positioned at an angle such that boxing will not expand the solar image any more than the periphery section or sections sufficient to materially effect the efficiency of the concentrator. It is generally preferred to maintain the angles for the smooth incident surfaces of the lenses such that the angle of incidence does not exceed 60° because the loss due to Fresnel reflections at the surface will exceed 10% with such high angles of incidence.

In the illustrated embodiment a support structure or frame 22 includes four hexagonally sided end pieces 40, 42, 44 and 46. Extended between the pairs of end pieces are center struts 48, intermediate fold struts 50 and edge struts 52. These struts extend lengthwise of the frame 22 and the end plates 40, 42, 44 and 46 are mounted on the absorber 26 which extends the length of the solar concentrator 20.

The target area or absorber 26, depending upon the particular application, may include a pipe with a heat absorbing fluid medium, photo-voltaic cells, etc. In the illustrated embodiment in Figures 3 and 4 an absorber 26 is depicted having an outer pipe 56 and an inner feeder pipe 58. The outer pipe 56 may have a translucent surface exposing a heat transfer fluid 57 within the absorber to the sunlight. The heat transfer fluid flows through the inner pipe 58 to the end of the absorber pipe 56 and then after being heated by exposure to the focused solar radiation to a main pipe 54 extending between sets of the solar concentrators 20. A solar power system utilizing photo-voltaic cells is illustrated in U.S. Patent No. 4,204,881.

Figures 5, 5A and 5B show a specific design for a solar concentrator 20 having the desired characteristics for a unit aperture, and where the first sections of the lens indicated at 60 and 62 are disposed such that the angle of incidence $I_1'$ for this angled steeped side is 45° and has a length from the marginal edge 52 to the support 50 of .29 units. The selection of the designation "units" is arbitrary for illustrative purposes only, any unit of measure may be utilized, for example, meters, feet, inches, etc. On this lens the angle $\phi$ made by the strut 48 to the edge strut 52 from the focal point of the solar concentrator 20 is 33.46°, and the angle $\alpha$ from the strut 48 to the second support strut 50 is 17.11°. The angle of incidence of the light with sections 64 and 66 of the solar concentrator are 13.75°, indicating an angle $I_1''$ in Figure 5B, equal to 13.75°. The distance TH from the focal point to the center of the solar collector is 1.03 units. As indicated in Figure 5B, the solar collector 20 in the area 66, corresponding to the area 64, has a smooth outer surface 30 and the fresnel prisms 32 form the opposite face 34. The fresnel prisms 32 have an optically active face or surface 70 and an inactive riser, face or surface 72. The angle between the optical face 70 and the smooth surface 30 is the angle $A''$, and the angle between the smooth surface 30 and the inactive surface is the angle $RA''$. The angle of the refracted ray leaving the optical face 70 is indicated for this section by the angle $I_2''$, giving an angle of deviation $D''$. As illustrated in Figure 5A, in the area 62, which would correspond to the area 60, the angle of incidence is indicated $I_1'$, and the exit angle, is $I_2'$ with an angle of deviation $D'$. The angle of the optically active face 80 would be the angle $A'$, and for the inactive adjacent connecting face 82 would be the angle $RA'$.

The disclosed equations are for exemplary purposes only and are not essential to the present invention. A number of alternative equations are well known to those skilled in the art or they may easily derive them or similar ones from Snell's Law of refraction and the rules of trigonometry, as, for example, disclosed in U.S. Patent No. 4,069,812. Thus, the parameters utilized in determining the design of the illustrated lens are as follows:

1) If a ray of light (from the sun) strikes the first surface of the folded fresnel lens at an angle of incidence I, then the condition of minimum deviation determines the angle A that the second surface of the lens must make to the first, and that the angle of minimum deviation is $D_m$:

$$D_m = 2(I - \sin^{-1}(\sin(I/n)))$$

where n is the index of refraction of the material.

2) The active face angle A of the lens, necessary to produce a given angle of deviation D, including the minimum deviation is:

$$A = \tan^{-1} \left\{ \frac{\sin(D - I) + \sin(I)}{(n^2 - \sin^2(I))^{1/2} - \cos(D - I)} \right\}$$

3) The riser between active optical faces of the lens will not intercept any light if it is positioned between the extreme rays from one side of the sun, having suffered only refraction at the first surface, and the extreme rays from the other side of the sun having suffered refraction at both lens surfaces. That is between the internal and the external rays. These rays become parallel and thus define a critical point on the lens when the internal and the external rays make an angle of RA to the first surface given by:

$$RA = \cos^{-1}(\sin(I - s)/n)$$

where s is half the angle the sun subtends at the lens (approximately 1/4 degree).

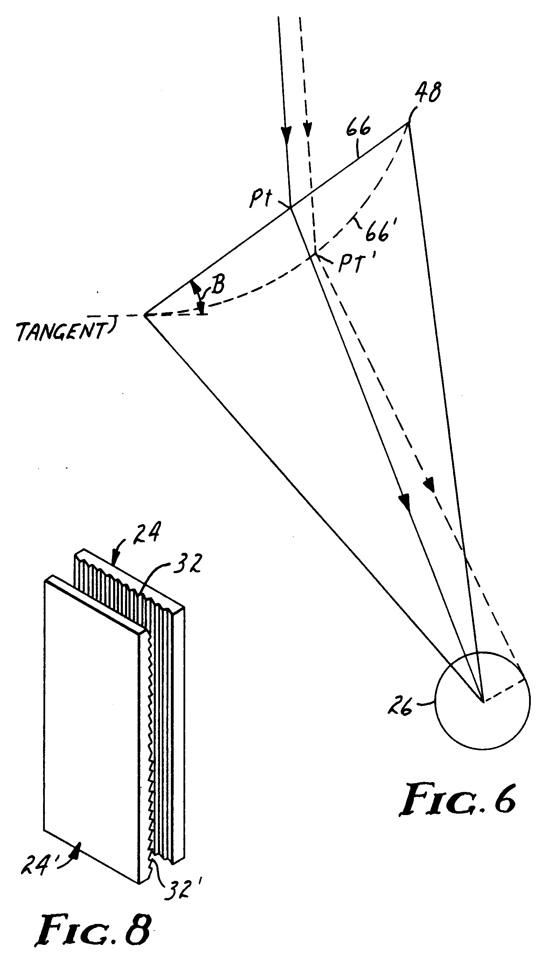

4) When a thin fresnel lens is subjected to distortion, the surface is displaced and rotated, as illustrated in Figure 6, where the solid line 66 and point of incidence, Pt, represent an undisturbed condition, and the broken line 66′ and point of incidence, Pt′, represent a bowed condition. For practical lenses of the kind discussed here, the rotation produces by far the greatest effect and is considered for the design although both effects are taken into account in the analysis. If r is the rotation of a portion of the lens (less than or equal to the bow B) where the angle of the second surface to the first is A and the angle of incidence in the absence of rotation is I, the resulting angle of deviation of the light is D:

$$D = -A + I + r + \sin^{-1}(n \sin(A - \sin^{-1}(\sin(I + r)/n)))$$

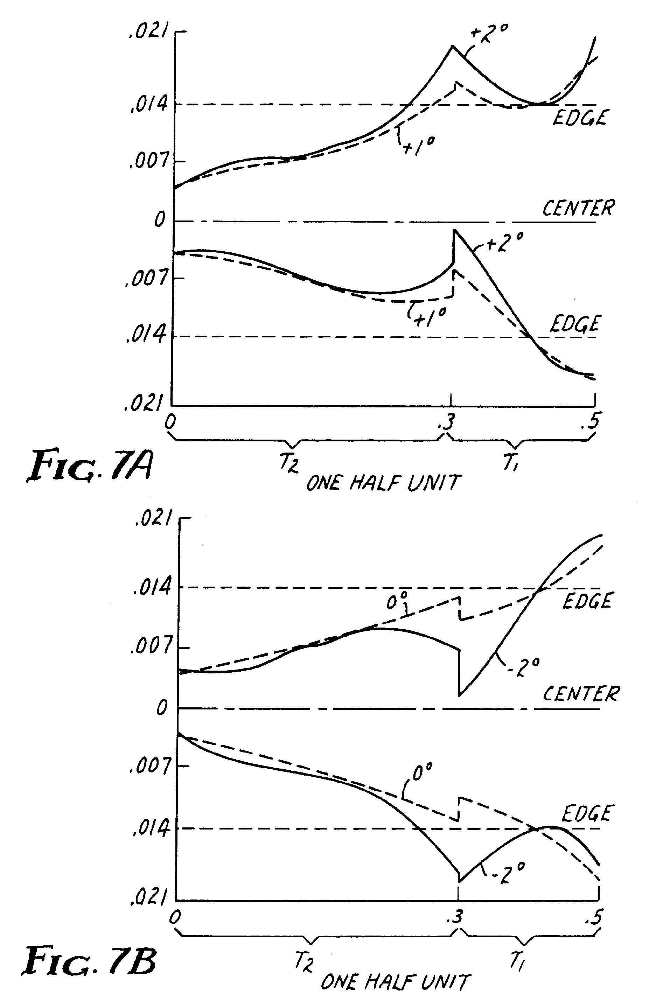

Utilizing these formula, the lens of the illustrated design is such that the active lens faces 70 and 80 of the fresnel prisms 32 direct light sufficiently close to the target area 26 as illustrated by the graph of Figures 7A and 7B, such that a minimum amount of the solar energy is lost even with a wind tending to bow the surface of the lens such that the lens may still be made of thin films, and require less weight for the total solar energy concentrator. Some representative steps for the lens of the present invention are given in the following table wherein the numbers under $S_1$ and $S_2$ equal the distances from the center of the solar concentrator to the prism where one unit is the total aperture of the entire solar concentrator. $S_1$ represents the distances within aperture $T_1$ and $S_2$ representing distances within aperture $T_2$. $T_1$ is the aperture of the sections 60 and 62, and $T_2$ is the aperture of the sections 64 and 66. The ratio of the lens aperture $T_2$ to $T_1$ is equal to 1.45, the index of refraction of the material is 1.493 and $I_1' = 45°$ and $I_1'' = 13.75721°$. RA′ represents the minimum riser angle for this lens design which is 61.86545° and RA″ is 80.99957°. However, it should be appreciated that the riser angle may increase for fresnel prisms outboard of the critical riser angle.

6

TABLE $T_1$

| $S_1$ | A' | $I_2'$ | D' |
|---|---|---|---|
| .5000 | 56.5384 | 45 | 33.4616 |
| .4720 | 53.5360 | 39.5880° | 31.0520 |
| .4445 | 50.2010 | 33.8927° | 28.6917 |
| .4165 | 46.5696 | 27.9565° | 26.3869 |
| .3890 | 42.6990 | 21.8419° | 24.1429 |
| .3610 | 38.6647 | 15.6286° | 21.9639 |
| .3335 | 34.5549 | 9.4080° | 19.8531 |
| .3055 | 30.4620 | 3.2748° | 17.8128 |
| .2960 | 29.0493 | 1.1648° | 17.1155 |

TABLE $T_2$

| $S2$ | A'' | $I_2''$ | D'' |
|---|---|---|---|
| .2960 | 31.9275 | 35.2858 | 17.1155 |
| .2780 | 30.3464 | 32.6461 | 16.0569 |
| .2500 | 27.7576 | 28.4256 | 14.4252 |
| .2220 | 24.9984 | 24.0037 | 12.7925 |
| .1945 | 22.0640 | 19.4681 | 11.1613 |
| .1665 | 19.0049 | 14.7820 | 9.5343 |
| .1390 | 15.8467 | 10.0036 | 7.9141 |
| .1110 | 12.6284 | 5.1744 | 6.3032 |
| .0835 | 9.3927 | .3396 | 4.7041 |
| .0555 | 6.1826 | −4.4555 | 3.1191 |
| .0000 | 0.0000 | −13.7572 | 0.0000 |

Figure 7A shows the position of the solar image on the target area or absorber whose width is .028 as a function of $S_1$ and $S_2$. Shown is one half of the full aperture of the solar concentrator. This half is equal to one-half unit. The half aperture is divided into parts $T_1$ and $T_2$. The solid line indicates the spread of the image including chromatic aberration due to a bow of +2°, and the broken line shows the spread of the image including chromatic aberration due to a bow of +1°. Figure 7B shows the spread of the image including chromatic aberration for a bow of -2° (solid line), and the broken line shows the spread of the image including chromatic aberration when the thin flexible fresnel lens 24 is in its flat, normal position, without bow. This image deterioration is acceptable.

In order for the solar energy concentrator of the present invention to operate efficiently throughout the daylight hours, it will be necessary to track the sun across the sky, thereby keeping the lens 24 always pointing in the direction of the sun. Thus a tracking means (not shown) of the type for example disclosed in U.S. Patent Nos. 4,352,350; 4,347,834; and 4,089,323, may be attached to the concentrator 20. Thus, the selected tracking means may be utilized in accordance with three tracking schemes, depending upon the application requirements, as described in U.S. Patent Nos. 4,069,812 and 4,011,857.

The concentrator of solar energy of this invention can also be designed to focus the radiant energy onto a target or absorber which has a very small area and is essentially a spot or point. The sheet or lens 24 structured on one side with linearly arrayed discrete fresnel- prisms 32 can be placed into close contact with another sheet or lens 24' also structured on one side with an array of special discrete linear fresnel prisms 32' disposed perpendicular to the first sheet 24, as illustrated in Figure 8. Or the first sheet can be structured on both sides. Another configuration consists of a structured sheet formed into a frustum and then topped with another sheet formed into a cone having a different angle than the frustum. This assembly of structured sheets will also focus the solar radiation onto a very small area, essentially a spot. The sheet of linearly arrayed fresnel prisms can also be cut into pie shaped triangles and fitted together to form a pyramid which configuration will also focus the incident solar radiation onto a spot.

Having thus described the present invention it is appreciated that the specific design of the lens and the path of the light through the lens is determined by the angle of the steps of the lens, all of which are contemplated without departing from the present invention. The compact and efficient designs for the lenses are due to the angle of incidence of the sun's rays to the fresnel lens being essentially equal to the angle of the exit ray to the fresnel active face at or near the edge of the lens.

In another embodiment the long narrow target is an absorber pipe so constructed that the liquid heated by solar radiation leaves through the center of the absorber which consists of a pipe within a pipe. Because the unit is light weight it can be employed in most locations, especially where massive, cumbersome units are not suited. Because, in one embodiment, it can be rolled up into a small package it is especially well adapted for use in space. After the vehicle has been launched and is in orbit the solar concentrator, of this invention, can be automatically deployed. Precision alignment is not necessary for efficient operation.

## Claims

1. A thin, very flexible lens, consisting of a film sheet (24) having on one side a linear array of discrete optically active prismatic light ridges and grooves whereby when the film sheet is supported on a frame such that it is folded along at least one line parallel to said linear arrays of prismatic light ridges and grooves such that instant sunlight is not normal to the film sheet the shape of said prismatic light ridges and grooves changes in the manner of the Fresnel lens such that incident solar radiation is focused onto a target area, characterized in that said film sheet (24) is so designed that for the light striking the film sheet at its outer edge with respect to the axis of said ridges and grooves the angle of incidence ($I_1'$) on said film sheet (24) as measured to a normal to the surface (62) through which light enters and the exit angle ($I_2'$) as measured to a normal to the surface (80) through which the light exits are substantially equal, such that the focus of the incident solar radiation by the lens is less sensitive to bowing of the film sheet.

2. The lens defined in Claim 1 wherein said film sheet has a smooth surface (30) on the opposite surface to the side having said linear array of discrete optically active prismatic light ridges and grooves, said linear array of prismatic grooves and ridges constituting a section (60) of light refracting means (32) defining refracting faces (70, 80) and adjacent inactive connecting faces (72).

3. The lens defined in Claim 2 further characterized in that said film sheet (24) is divided into at least two adjacent sections (60, 62, 64, 66) wherein each of said sections has a separate light refracting means (32) associated therewith.

4. The lens defined in Claim 3 further characterized in that said adjacent section (60, 62, 64 and 66) are connected by intermediate regions (28 and 28') of said film sheet, whereby said flexible film sheet may be folded along said intermediate regions (28 and 28') toward the target area (26) and the optical efficiency of the lens is not materially affected by distortion of said film.

5. The lens defined in any one of Claims 1 to 4 further characterized in that said film sheet (24) is formed of a limply flexible sheet of polymeric material.

6. The lens defined in any one of Claims 1 to 5 further characterized in that said lens (24) is rectangular and symmetrical about a longitudinal axis.

7. The lens according to Claim 2 or any claim appended to Claim 2 further characterized in that the film sheet (24) is divided into four adjacent sections (60, 62, 64 and 66) transversely with the adjacent sections (60 and 62) on each edge disposed to have angle of incidence with the solar radiation striking said smooth surface (30) between 35° and 60° and the inner segments (64 and 66) on either adjacent side of said longitudinal axis being disposed to have an angle of incidence with the solar radiation of between 5° and 20°.

8. The lens defined in Claim 7 further characterized in that the range of angles of the optically active surfaces (80) of the light reflecting means (32) in the sections (60, 62) adjacent the edges of the lenses are disposed between 37° and 68°, and wherein the angles of the active faces (70) of the light reflecting means (32) on the adjacent inner sections (64 and 66) is between 0° and 42°.

9. The lens defined in Claim 2 or any claim appended to Claim 2, further characterized in that indicent solar radiation first strikes the smooth surface (30) of said film sheet (24).

10. The lens defined in Claim 2 further characterized in that said film sheet (24) consists of one section (60, 62, 64 or 66) inclined above said target area (26) at an angle to the incident solar radiation.

11. The lens defined in any one of Claims 1 to 10 further characterized in that the optical efficiency of said film is not materially affected by distortion of said film.

12. A solar energy concentrator comprising a target area (26) and a lens according to Claim 1; wherein said lens (24) is a film sheet of polymeric film having a smooth surface (30) and an opposite surface (34) formed with said linear array of discrete optically active prismatic light ridges and grooves for refracting incident solar radiation striking said lens means (24); there being;
    support means (22) for supporting said lens means (24) above said target area (26), and said lens means (24) being mounted upon said support means (22) to open toward said target area (26) whereby said lens means (24) is folded at least one line (28) parallel to said ridges and grooves to define at least two sections (60, 62, 64, 66) of light refracting means (32) designed for focusing said incident solar radiation onto said target area (26).

13. The solar energy concentrator defined in Claim 12 further characterized in that said film is folded along at least one line (28) parallel to the axis of said target area (26).

14. The solar energy concentrator defined in Claim 12 further characterized in that said target area (26) includes at least one pipe (56 or 58) for transferring an absorptive media (57).

15. The solar energy concentrator defined in Claim 12 further characterized in that said concentrator further comprises second lens means (24′) having a smooth surface (30′) and an opposite surface (34′); said opposite surface (34′) being formed of a plurality of lenticular light refractive means (32′) for focusing incident solar radiation striking said film onto said target area (26); and said supprt means (22) is adapted for additionally suporting said second lens means (24′) above said target area (26) whereby said incident light striking said lens means (24) and said second lens means (24′) is point focused onto said target area (26).

16. The solar energy concentrator defined in Claim 12 further characterized in that said smooth surface (30) comprises a plurality of lenticular light refracting prisms (32) for focusing incident solar radiation striking said film onto said target area (26), whereby said incident light is point focused.

17. A method for concentrating incident solar radiation onto a target area (26) having a generally linear profile comprising;
    providing a thin flexible transparent film having a smooth surface (30) and an opposite surface (34) formed with an array of prismatic ridges and grooves defining light refracting surfaces (70 and 80);
    arranging a frame (22) having a rectangular aperture along the horizontal axis of the target area (26);
    arranging the thin flexible transparent film over said frame (22) under tension to minimize sagging and to cover said aperture such that said opposite surface formed with said array of prismatic ridges and grooves faces towards said target area in a manner to direct solar radiation striking the exposed smooth surface (30) of the film towards said target area; characterized by
    forming said frame from a plurality of parallel struts (48, 50) with one strut (48) at the longitudinal center of said frame and one strut (50) on each side of said strut (48) at the center; and
    using as said thin flexible transparent film the film sheet as defined in Claim 1.

**Patentansprüche**

1. Dünne, sehr flexible Linse, die aus einer Filmfläche (24) besteht, die auf einer Seite eine lineare Anordnung diskreter, optisch aktiver, prismatischer Lichtrippen und Rillen aufweist, wobei sich die Form der prismatischen Lichrippen und Rillen auf wie bei einer Fresnel-Linse ändert, so daß einfallende Sonnenstrahlung auf einen Zielbereich fokussiert wird, wenn die Filmfläche auf einem Rahmen lagert, so daß sie mindestens entlang einer zu der linearen Anordnung von prismatischen Lichtrippen und Rillen parallelen Linie gefaltet wird, so daß die momentan einfallende Sonnenstrahlung nicht senkrecht zu der Filmfläche ist, dadurch gekennzeichnet, daß die Filmfläche (24) so gestaltet ist, daß bezüglich dem Licht, das an dem äußeren Rand der Filmfläche relativ zu der Achse der Rippen und Rillen auf die Filmfläche auftrifft, der Einfallswinkel ($I_1'$) auf der Filmfläche (24) im rechten Winkel zu einer Oberfläche (62), durch die das Licht einfällt, und der Austrittswinkel ($I_2'$) zu einer Senkrechten zu der Oberfläche (80), durch die das Licht austritt, im wesentlichen gleich groß sind, so daß die Fokussierung der einfallenden Sonnenstrahlung durch die Linse in bezug auf eine Krümmung der Filmfläche weniger empfindlich ist.

2. Linse nach Anspruch 1, wobei die Filmfläche auf der Oberfläche, die zu der Seite mit der linearen Anordnung diskreter, optisch aktiver, prismatischer Lichtrippen und Rillen entgegengesetzt ist, eine glatte Oberfläche (30) aufweist, wobei die lineare Anordnung prismatischer Rippen und Rillen einen Abschnitt (60) einer lichtbrechenden Einrichtung (32) darstellt, welche lichtbrechende Oberflächen (70, 80) und angrenzende, inaktive Verbindungsoberflächen (72) definiert.

3. Linse nach Anspruch 2, ferner dadurch gekennzeichnet, daß die genannte Filmfläche (24) in mindestens zwei aneinander angrenzende Abschnitte (60, 62, 64, 66) unterteilt ist, wobei jeder der Abschnitte eine eigene, separate lichtbrechende Einrichtung (32) aufweist.

4. Linse nach Anspruch 3, ferner dadurch gekennzeichnet, daß die aneinander angrenzenden Abschnitte (60, 62, 64 und 66) durch Zwischenbereiche (28 und 28') der Filmfläche miteinander verbunden sind, wodurch die flexible Filmfläche entlang der genannten Zwischenbereiche (28 und 28') zu dem Zielbereich (26) gefaltet werden kann, und wobei die optische Ausbeute durch die Verzerrung des Films nicht wesentlich beeinträchtigt wird.

5. Linse nach einem der Ansprüche 1 bis 4, ferner dadurch gekennzeichnet, daß die Filmfläche (24) aus einer schlaffen, flexiblen Lage eines Polymerstoffes gestaltet ist.

6. Linse nach einem der Ansprüche 1 bis 5, ferner dadurch gekennzeichnet, daß die Linse (24) rechteckig und um eine Längsachse symmetrisch ist.

7. Linse nach Anspruch 2 oder nach einem an den Anspruch 2 anhängigen Anspruch, ferner dadurch gekennzeichnet, daß die Filmfläche (24) transversal in vier aneinandergrenzende Abschnitte (60, 62, 64 und 66) unterteilt ist, wobei die angrenzenden Abschnitte (60 und 62) an jedem Rand so angeordnet sind, daß sie mit der auf der glatten Oberfläche (30) auftreffenden Sonnenstrahlung einen Einfallswinkel von 35° bis 60° aufweisen, und wobei die inneren Abschnitte (64 und 66) an jeder angrenzenden Seite der Längsachse so angeordnet sind, daß sie mit der Sonnenstrahlung einen Einfallswinkel von 5° bis 20° aufweisen.

8. Linse nach Anspruch 7, ferner dadurch gekennzeichnet, daß der Bereich der Winkel der optisch aktiven Oberflächen (80) der lichtbrechenden Einrichtung (32) in den Abschnitten (60, 62) neben den Rändern der Linsen zwischen 37° und 68° liegt, und wobei die Winkel der aktiven Oberflächen (70) der lichtbrechenden Einrichtung (32) an den angrenzenden inneren Abschnitten (64 und 66) zwischen 0° und 42° liegen.

9. Linse nach Anspruch 2 oder nach einem an den Anspruch 2 anhängigen Anspruch, ferner dadurch gekennzeichnet, daß die einfallende Sonnenstrahlung zuerst auf der glatten Oberfläche (30) der Filmfläche (24) auftrifft.

10. Linse nach Anspruch 2, ferner dadurch gekennzeichnet, daß die Filmfläche (24) einen Abschnitt (60, 62, 64 oder 66) umfaßt, der über dem Zielbereich (26) in einem Winkel zu der einfallenden Sonnenstrahlung geneigt ist.

11. Linse nach einem der Ansprüche 1 bis 10, ferner dadurch gekennzeichnet, daß die optische Ausbeute des Films durch die Verzerrung des Films nicht wesentlich beeinträchtigt wird.

12. Einrichtung zur Konzentration von Sonnenenergie, mit einem Zielbereich (26) und einer Linse nach Anspruch 1, wobei es sich bei der Linse (24) um eine Filmfläche eines polymeren Films mit einer glatten Oberfläche (30) und einer entgegengesetzten Oberfläche (34) handelt, die mit der genannten linearen Anordnung diskreter, optisch aktiver, prismatischer Lichtrippen und Rillen zum Brechen von einfallender, auf der Linseneinrichtung (24) auftreffender Sonnenstrahlung ausgebildet ist; und mit

einer Trägereinrichtung (22) zum Tragen der Linseneinrichtung (24) über dem Zielbereich (26), und wobei die genannte Linseneinrichtung (24) auf der Trägereinrichtung (22) angebracht ist, so daß sie sich zu dem Zielbereich (26) hin öffnet, wodurch die Linseneinrichtung (24) mindestens entlang einer zur den Rippen und Rillen parallelen Linie gefaltet wird, so daß mindestens zwei Abschnitte (60, 62, 64, 66) der lichtbrechenden Einrichtung (32) definiert werden, die zur Fokussierung der auf dem Zielbereich (26) auftreffenden Sonnenstrahlung dienen.

13. Einrichtung zur Konzentration von Sonnenenergie nach Anspruch 12, ferner dadurch gekennzeichnet, daß der genannte Film mindestens entlang einer zu der Achse des Zielbereichs (26) parallelen Linie gefaltet wird.

14. Einrichtung zur Konzentration von Sonnenenergie nach Anspruch 12, ferner dadurch gekennzeichnet, daß der Zielbereich (26) mindestens eine Röhrenleitung (56 oder 58) für die Übertragung eines absorptionsfähigen Mediums (57) aufweist.

15. Einrichtung zur Konzentration von Sonnenenergie nach Anspruch 12, ferner dadurch gekennzeichnet, daß die Konzentrationseinrichtung ferner eine zweite Linseneinrichtung (24') mit einer glatten Oberfläche (30') und einer entgegengesetzten Oberfläche (34') umfaßt; wobei die entgegengesetzte Oberfläche (34') aus einer Mehrzahl linsenförmiger lichtbrechender Einrichtungen (32') zur Fokussierung auf dem Film auftreffender, einfallender Sonnenstrahlung auf den Zielbereich (26) gestaltet ist, wodurch das einfallende Licht, das auf der Linseneinrichtung (24) und der zweiten Linseneinrichtung (24') auftrifft, auf den Zielbereich (26) punktfokussiert wird.

16. Einrichtung zur Konzentration von Sonnenenergie nach Anspruch 12, ferner dadurch gekennzeichnet, daß die glatte Oberfläche (30) eine Mehrzahl linsenförmiger, lichtbrechender Prismen (32) zur Fokussierung von einfallender Sonnenstrahlung, die auf dem Film auftrifft, auf den Zielbereich (26) umfaßt, wobei das einfallende Licht punktfokussiert wird.

17. Verfahren zur Konzentration einfallender Sonnenstrahlung auf einen Zielbereich (26) mit einem allgemein geradlinigen Profil, wobei das Verfahren folgende Schritte umfaßt:

Bereitstellung eines dünnen, flexiblen, transparenten Films mit einer glatten Oberfläche (30) und einer entgegengesetzten Oberfläche (34), die mit einer Anordnung prismatischer Rippen und Rillen versehen ist, die lichtbrechende Oberflächen (70 und 80) bilden;

Anordnung eines Rahmens (22) mit einer rechteckigen Öffnung entlang der horizontalen Achse des Zielbereichs (26);

Anordnung des dünnen, flexiblen, transparenten Films unter Spannung über dem Rahmen (22) um eine Durchbiegung zu minimieren und um die Öffnung zu bedecken, so daß die mit der Anordnung prismatischer Rippen und Rillen versehene entgegengesetzte Oberfläche so zu dem Zielbereich gerichtet ist, daß die auf der exponierten glatten Oberfläche (30) des Films auftreffende Sonnenstrahlung zu dem Zielbereich gerichtet wird; gekennzeichnet durch:

die Gestaltung des genannten Rahmens aus einer Mehrzahl paralleler Streben (48, 50), wobei sich eine Strebe (48) in der longitudinalen Mitte des Rahmens befindet, und wobei sich eine Strebe (50) auf jeder Seite der genannten Strebe (48) in der Mitte befindet; und wobei

die gemäß Anspruch 1 definierte Filmfläche für den genannten dünnen, flexiblen, transparenten Film verwendet wird.

**Revendications**

1. Lentille très flexible mince, consistant en un film en feuille (24) disposant sur une face d'une matrice linéaire de nervures et rainures discrète en forme de prisme optiquement actif à la lumière, ce par quoi, lorsque le film en feuille est supporté sur une structure de façon à être replié le long d'au moins une ligne parallèle sur lesdites matrices linéaires de nervures et rainures en forme de prisme optique de façon que la lumière du soleil instantanée soit perpendiculaire au film en feuille, la forme desdites nervures et rainures en forme de prisme optique change à la manière de lentilles de Fresnel de façon que le rayonnement solaire incident soit concentré sur une surface cible, caractérisé en ce que ledit film en feuille (24) est conçu de façon que la lumière frappant le film en feuille sur son bord périphérique par rapport à l'axe desdites nervures et rainures, l'angle d'incidence (I1′) sur ledit film en feuille (24) tel que mesuré par rapport à une normale à la surface (32) avec lequel la lumière entre et l'angle de sortie (I2′) tel que mesuré par rapport à une normale à la surface (80) avec lequel la lumière sort sont sensiblement identiques, de façon que la concentration du rayonnement solaire incident par la lentille est moins sensible aux déformations du film en feuille.

2. Lentille selon la revendication 1, dans laquelle ledit film en feuille présente une surface lisse (30) sur la surface opposée à la face qui est pourvue de ladite matrice linéaire de nervures et rainures discrètes en forme de prisme optiquement actif, ladite matrice linéaire de nervures et rainures en forme de prisme constituant une section (60) d'un moyen réfractant la lumière (32) définissant des faces de réfraction (70, 80) et des faces de liaison adjacentes inactives (72).

3. Lentille selon la revendication 2, caractérisée en outre en ce que ledit film en feuille (24) est divisé en au moins deux sections adjacentes (60, 62, 64, 66) dans laquelle chacune desdites sections dispose d'un moyen de réfraction de la lumière (32) différent associé avec elle.

4. Lentille selon la revendication 3, caractérisée en outre en ce que, lesdites sections adjacentes (60, 62, 64 et 66) sont reliées par des zones intermédiaires (28 et 28′) dudit film en feuille, ce par quoi, ledit film en feuille flexible peut être plié le long desdites zones intermédiaires (28 et 28′) vers la surface cible (26) et l'efficacité optique de la lentille n'est pas matériellement affectée par la distorsion dudit film.

5. Lentille selon l'une quelconque des revendications 1 à 4, caractérisée en outre en ce que ledit film en feuille (24) est constitué d'une feuille flexible transparente en matière polymérique.

6. Lentille selon l'une quelconque des revendications 1 à 5, caractérisée en outre en ce que ladite lentille (24) est rectangulaire et symétrique par rapport à un axe longitudinal.

7. Lentille selon la revendication 2 ou l'une quelconque des revendications dépendant de la revendication 2, caractérisée en outre en ce que le film en feuille (24) est divisé en quatre sections adjacentes (60, 62, 64 et 66) de façon transversale, les sections adjacentes (60 et 62) sur chaque bord étant disposées pour obtenir un angle d'incidence avec le rayonnement solaire frappant ladite surface lisse (30) entre 35° et 60° et les segments internes (64 et 66) sur chaque côté adjacent audit axe longitudinal étant disposés pour obtenir un angle d'incidence avec le rayonnement solaire compris entre 5° et 20°.

8. Lentille selon la revendication 9, caractérisée en outre en ce que la plage d'angles des surfaces optiquement actives (80) du moyen réfractant la lumière (32) sur les sections (60, 62) adjacentes au bord des lentilles est comprise entre 37° et 68°, et dans laquelle les angles des faces actives (70) du moyen réfractant la lumière (32) sur les sections internes adjacentes (64 et 66) sont compris entre 0 et 42 degrés.

9. Lentille selon la revendication 2 ou l'une quelconque des revendications dépendant de la revendication 2, caractérisée en outre en ce que le rayonnement solaire incident frappe en premier la surface lisse (30) dudit film en feuille (24).

10. Lentille selon la revendication 2, caractérisée en outre en ce que ledit film en feuille (24) consiste en une section (60, 62, 64 ou 66) inclinée par rapport à ladite surface cible (26) à un certain angle par rapport au rayonnement solaire incident.

11. Lentille selon l'une quelconque des revendications 1 à 10, caractérisée en outre en ce que l'efficacité optique dudit film n'est pas matériellement affecté par la distorsion dudit film.

12. Dispositif de concentration d'énergie solaire comprenant une surface cible (26) et une lentille selon la revendication 1; dans lequel ladite lentille (24) est un film en feuille d'un film polymérique disposant d'une surface lisse (30) et d'une surface opposée (34) sur laquelle ladite matrice linéaire de nervures et rainures en prisme lumineux optiquement actifs discrètes destiné à réfléchir le rayonnement solaire incident frappant ledit moyen formant lentille (24); dans lequel;

des moyens support (22) destinés à supporter le moyen formant lentille (24) au-dessus de ladite surface cible (26), et ledit moyen formant lentille (24) étant monté au-dessus desdits moyens support (22) pour donner sur ladite surface cible (26), ce par quoi, ledit moyen formant lentille est replié sur au moins une ligne (28) parallèle auxdites nervures et rainures pour définir au moins deux sections (60, 62, 64, 66) de moyens réfractant la lumière (32) conçus pour concentrer ledit rayonnement solaire incident sur ladite surface cible (26).

13. Dispositif de concentration d'énergie solaire selon la revendication 12, caractérisé en outre en ce que ledit film est enroulé le long d'au moins une ligne (28) parallèle à l'axe de ladite surface cible (26).

14. Dispositif de concentration d'énergie solaire selon la revendication 12, caractérisé en outre en ce que ladite surface cible (26) inclut au moins un tube (56 ou 58) destiné à transférer un fluide absorbant (57).

15. Dispositif de concentration solaire selon la revendication 12, caractérisé en outre en ce que ledit concentrateur comprend en outre un second moyen formant lentille (24') disposant d'une surface lisse (30') et d'une surface opposée (34'); ladite surface opposée (34') étant formée d'une pluralité de moyens réfractant la lumière de forme lenticulaire (32) pour concentrer le rayonnement solaire incident frappant ledit film sur ladite surface cible (26); et en ce que lesdits moyens support (22) sont adaptés pour supporter en plus ledit second moyen formant lentille (24) au-dessus de ladite surface cible (26) ce par quoi ladite lumière incidente frappant ledit moyen formant lentille (24) et ledit second moyen formant lentille (24') est concentré en un point sur ladite surface cible (26).

16. Dispositif de concentration solaire selon la revendication 12, caractérisé en outre en ce que ladite surface lisse (30) comprend une pluralité de prismes réfractant la lumière de forme lenticulaire (32) pour concentrer le rayonnement solaire incident frappant ledit film sur ladite surface cible (26), ce par quoi, ladite lumière incidente est concentrée en un point.

17. Procédé de concentration de rayonnement solaire incident sur une surface cible (26) présentant un profil globalement linéaire comprenant;

la fourniture d'un film mince transparent flexible disposant d'une surface lisse (30) et d'une surface opposée (34) formé d'une matrice de nervures et rainures de forme prismatique définissant des surfaces réfractant la lumière (70 et 80);

la disposition d'une structure (22) pourvue d'une ouverture rectangulaire le long de l'axe horizontal de la surface cible (26);

la disposition du film mince transparent flexible au-dessus de ladite structure (22) sous tension de façon à minimiser l'affaissement et pour recouvrir ladite ouverture de façon que ladite surface opposée formée avec ladite matrice de nervures et rainures de forme prismatique fasse face à ladite surface cible de manière à diriger le rayonnement solaire frappant la surface lisse exposée (30) du film vers ladite surface cible; caractérisé par

la formation de ladite structure à partir d'une pluralité de tubes parallèles (48, 50), l'un des tubes (48) sur l'axe longitudinal de ladite structure et un tube (50) sur chaque côté dudit tube (48) dans l'axe; et

l'utilisation pour ledit film mince transparent flexible du film en feuille tel que défini dans la revendication 1.

FIG. 1

FIG. 2

FIG. 4

FIG. 3

14

FIG. 5

FIG. 5A

FIG. 5B

48

66

Pt

66'

PT'

B

TANGENT

26

FIG. 6

24

32

24'

32'

FIG. 8

FIG. 7A

FIG. 7B

17